# FASCICULE DE BREVET EUROPEEN

(11) **EP 1 332 424 B1**
(45) Date de publication et mention de la délivrance du brevet: **16.11.2005**
(21) Numéro de dépôt: 01969899.2
(22) Date de dépôt: 14.09.2001
(51) Int. Cl.: G06F 3/023, G06F 3/033

(54) **PROCEDE DE TRAITEMENT DU DEPLACEMENT D'UN CURSEUR SUR UN ECRAN**
VORRICHTUNG ZUR VERARBEITUNG DER BEWEGUNG EINES ZEIGERS AUF EINEM BILDSCHIRM
METHOD FOR CONTROLLING THE MOVEMENT OF A CURSOR ON A SCREEN

(30) Priorité: 15.09.2000 FR 0011816
(43) Date de publication de la demande: 06.08.2003
(73) Titulaire: Thales, 75008 Paris (FR)
(72) Inventeur: AYMERIC, Bruno, c/o Thales Intellectual Property, F-94117 Arcueil Cedex (FR)
(74) Mandataire: Brochard, Pascale
(86) Numéro de dépôt international: PCT/FR2001/002869
(87) Numéro de publication internationale: WO 2002/023322

(56) Documents cités:
- US-A- 5 598 183
- US-A- 5 808 601

## Description

L'invention concerne le domaine des procédés de traitement du déplacement d'un curseur sur un écran qui comporte une ou plusieurs zones activables par le curseur. A cet écran est généralement associé un bloc de désignation permettant à un opérateur humain de commander le déplacement du curseur sur l'écran et de désigner une zone activable particulière par l'intermédiaire du curseur. L'invention concerne notamment le domaine des procédés de traitement du déplacement d'un curseur sur un écran de console d'aéronef.

Selon un premier art antérieur, un ensemble de boutons durs permet à l'opérateur humain de désigner les zones activables de l'écran. Un inconvénient de cet art antérieur est d'avoir rapidement tendance à devenir complexe et volumineux.

Selon un deuxième art antérieur, une tablette tactile permet à l'opérateur humain de désigner les zones activables de l'écran. Un inconvénient de cet art antérieur est de ne permettre un fonctionnement précis qu'avec des zones activables de grande taille type cases de menu.

Selon un troisième art anteneur, dans les zones à haute densité de zones activables, un dispositif autorisant un fonctionnement de type discret pour le bloc de désignation est mis en place. Un inconvénient de cet art antérieur est de ne pas être adapté aux fenêtres d'écran à basse densité de zones activables ou aux fenêtres d'écran à topologie de zones activables non prédéfinie. Un autre Inconvénient de cet art antérieur est de nécessiter une implémentation lourde, laquelle rend particulièrement complexe la gestion de tout changement dans l'agencement des zones activables.

Le problème des différents arts antérieurs est soit d'offrir des solutions complexes et coûteuses ainsi que partiellement inefficaces, soit d'offrir des solutions peu pratiques et peu efficaces à cause de l'imprécision d'un opérateur humain lorsqu'il commande le curseur, en particulier d'une part lorsqu'il le commande à l'aide d'un levier de commande multidirectionnel (dénomination anglaise « joystick »), et en particulier d'autre part lorsque la taille à l'écran des zones activables diminue.

Les brevets US 5,598,183 et US 5,808,601 proposent des systèmes de commande d'un curseur sur un écran permettant de positionner automatiquement le curseur dans un position prévue par un utilisateur. Un moyen décrit dans ces brevets est basé sur l'attraction conditionnelle lorsque le curseur est détecté dans une zone située dans la région d'une zone de contrôle.

L'invention propose une solution dans laquelle, même en présence de zones activables de taille relativement petite, même avec l'utilisation d'un levier de commande multidirectionnel, la désignation des zones activables par commande d'un opérateur humain reste pratique et efficace, grâce à l'utilisation, par le procédé de traitement du déplacement du curseur, de zones d'attraction respectivement associées à tout ou partie des zones activables sur l'écran. Le procédé selon l'invention impose une condition supplémentaire à la réalisation de l'étape d'attraction vers la zone activable permettant de rendre cette étape plus efficace et plus pratique.

Selon l'invention, il est prévu un procédé de traitement du déplacement d'un curseur sur un écran selon la revendication 1. L'invention a aussi pour objet un système de commande d'un curseur sur un écran comportant un module de traitement pour la mise en oeuvre du procédé selon l'invention, associé audit écran.

L'invention sera mieux comprise et d'autres particularités et avantages apparaîtront à l'aide de la description ci-après et des dessins joints, donnés à titre d'exemples, où :
- les figures 1 à 3 représentent schématiquement trois diagrammes explicatifs de deux types de mode de fonctionnement différents du procédé selon l'invention ;
- les figures 4 à 6 représentent schématiquement trois autres diagrammes explicatifs d'un type de mode de fonctionnement préférentiel du procédé selon l'invention ;
- les figures 7 à 8 représentent deux types de forme de zones activables utilisées par un procédé selon l'invention ;
- la figure 9 représente un découpage en blocs fonctionnels d'un système complet préférentiel de désignation comportant un module de traitement mettant en oeuvre le procédé de traitement selon l'invention.

Le procédé de traitement selon l'invention est un procédé de traitement du déplacement d'un curseur sur un écran. Ce procédé consiste à appliquer un traitement à la position du curseur lorsque celui-ci se déplace afin de rendre le déplacement du curseur plus pratique et plus efficace même si la commande de l'opérateur humain présente une certaine imprécision amenant le curseur près de la zone activable choisie mais sans amener ledit curseur dans ladite zone activable choisie. L'écran comporte une ou plusieurs zones activables par le curseur, généralement plusieurs zones activables. Une zone activable par le curseur est un bouton fictif sur l'écran qui peut être désigné ou activé par une simple commande de l'opérateur humain, par exemple une pression sur le bouton de validation d'un levier de commande multidirectionnel, lorsque le curseur se trouve dans ladite zone activable. Dans un procédé selon l'invention, au moins une zone activable est entourée par une zone d'attraction qui lui est associée, et de préférence toutes les zones activables présentes sur l'écran, ou plus précisément sur une fenêtre de l'écran sont entourées de zones activables qui leur sont respectivement associées : à chaque zone activable concernée est associée une et une seule zone d'attraction qui entoure ladite zone activable. Une zone d'attraction n'inclut pas la zone activable qu'elle entoure. Une zone d'attraction s'étend autour de la zone activable et l'englobe sans l'inclure. Le procédé selon l'invention réalise, lors du déplacement du curseur vers une position déterminée qui est effective ou fictive, une étape d'attraction conditionnelle. Une position déterminée signifie que le procédé considère une position particulière du curseur, laquelle position peut être effective ou fictive, la position déterminée pouvant être une position effective, c'est-à-dire réelle du curseur sur la trajectoire de son déplacement, choisie sur la trajectoire par le procédé ou autrement, ou bien une position fictive, c'est-à-dire une position simplement estimée ou anticipée par le procédé ou autrement, laquelle position est fictive au moment où le procédé réalise l'étape d'attraction conditionnelle même si cette position peut devenir réelle ensuite. Lors du déplacement du curseur vers ladite position déterminée signifie à l'occasion du déplacement du curseur vers ladite position déterminée, ce déplacement pouvant être notamment un déplacement complet séparé par deux positions arrêtées du curseur sur l'écran ou une partie d'un déplacement plus important ou un ensemble de déplacements élémentaires tendant vers ladite position déterminée. Des modes préférentiels pour le choix des limites précises du déplacement considéré ainsi que de la position déterminée vers laquelle ledit déplacement amène le curseur seront décrits ultérieurement. L'étape d'attraction réalise une « attraction » du curseur vers une zone activable déterminée, cette étape d'attraction est conditionnelle, c'est-à-dire que l'attraction n'est effectivement réalisée que si plusieurs conditions sont remplies. L'attraction vers une zone activable déterminée, si elle est effectivement réalisée, consiste à placer automatiquement le curseur sur ladite zone activable déterminée. L'attraction peut se réaliser effectivement seulement si une première condition est remplie, c'est-à-dire qu'elle ne peut se réaliser que si cette première condition est remplie, cette première condition étant remplie si la position déterminée est située dans la zone d'attraction associée à la zone activable déterminée. Plusieurs autres conditions sont également requises dans le procédé selon l'invention, mais cette première condition est nécessaire, même si elle n'est pas suffisante. Dans une réalisation préférentielle, lorsque la position déterminée est dans la zone d'attraction ou bien lorsque la position déterminée est dans la zone activable déterminée, la première condition est remplie, c'est-à-dire que lorsque la position déterminée est dans la zone activable et non pas dans la zone d'attraction associée, la première condition est également considérée comme remplie ; cela donne plus de temps à l'opérateur humain pour réagir et éventuellement activer la zone activable déterminée avant que le curseur n'ait dépassé ladite zone activable déterminée. Mais dans un autre mode de réalisation possible, lorsque la position déterminée est dans la zone activable et non pas dans la zone d'attraction associée, la première condition n'est pas considérée comme remplie. Dans tous les modes de réalisation, lorsque la position déterminée est dans la zone d'attraction associée à la zone activable déterminée, la première considération est toujours considérée comme remplie.

Selon l'invention, l'étape d'attraction conditionnelle est précédée d'une étape d'évaluation évaluant la direction du déplacement du curseur. La direction du déplacement du curseur peut être toute courbe suivant la trajectoire du déplacement du curseur ou toute courbe reflétant la direction globale du déplacement du curseur. Préférentiellement, la direction du déplacement est une droite passant d'une part par la position déterminée, effective ou fictive, et telle que définie dans ce qui précède, et d'autre part par un point de la trajectoire du déplacement du curseur, par exemple par la position du curseur au début du déplacement, les limites dudit déplacement considéré étant délimitées conformément à ce qui précède.

L'étape d'attraction conditionnelle est réalisée seulement si, en plus de la première condition, une deuxième condition est également remplie. Selon l'invention, au moins deux conditions doivent être remplies pour que l'étape d'attraction conditionnelle réalise une attraction effective du curseur dans une zone activable déterminée. La deuxième condition est remplie seulement si une portion de la direction du déplacement du curseur est située au voisinage de la zone activable déterminée. En plus de la première condition requérant que la position déterminée se situe dans la zone d'attraction associée à la zone activable dans laquelle l'attraction du curseur est susceptible de se réaliser, une deuxième condition requérant qu'une portion de la direction du déplacement du curseur soit située au voisinage de la zone activable déterminée, c'est-à-dire que la direction du déplacement du curseur soit dirigée vers ladite zone activable ou vers le voisinage de ladite zone activable, ledit voisinage étant délimité dans les modes de fonctionnement ou de réalisation préférentiels décrits ultérieurement. Cette deuxième condition permet d'éviter de réaliser une attraction vers une zone activable déterminée, lorsque, bien que la position déterminée soit située dans la zone d'attraction associée à ladite zone activable, la direction du déplacement du curseur ne semble apparemment pas dirigée vers ladite zone activable mais plutôt sans doute vers une autre zone activable plus éloignée de la position courante du curseur que ladite zone activable déterminée. Pour que cette deuxième condition soit efficace, il est préférable que le voisinage de la zone activable déterminée considérée, tout en englobant en l'incluant ladite zone activable déterminée, lorsque ledit voisinage comprend une partie de l'écran extérieure à ladite zone activable déterminée, comprenne une partie extérieure qui soit moins étendue que la zone d'attraction associée à ladite zone activable déterminée. Après qu'une attraction ait été effectivement réalisée, le curseur est de nouveau géré par le procédé normal de gestion du déplacement du curseur, procédé auquel se superpose le procédé de traitement du déplacement du curseur selon l'invention.

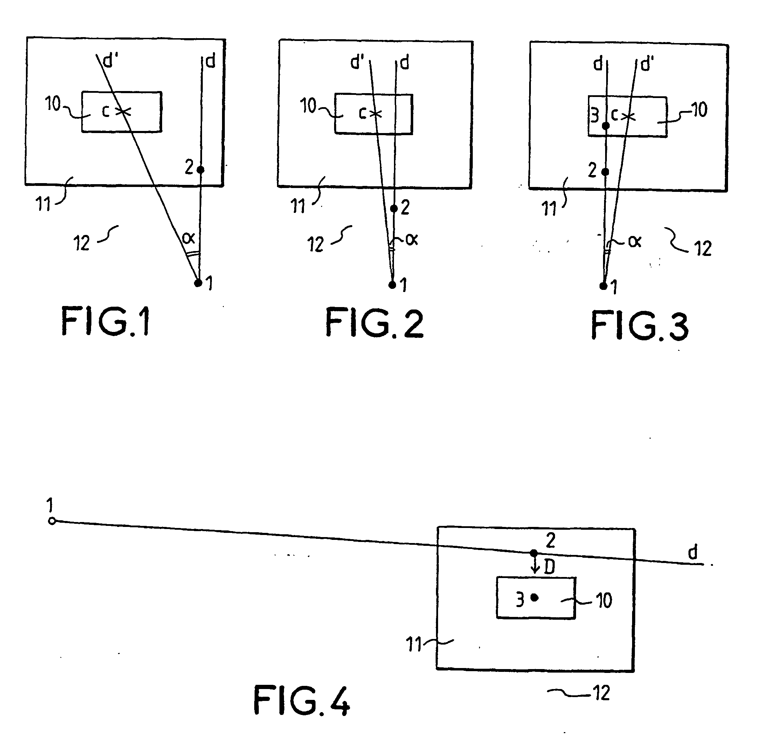

Dans un premier type de mode de fonctionnement, la deuxième condition est remplie seulement si l'angle que font entre elles une première droite et une deuxième droite, la première droite étant parallèle à la direction du déplacement du curseur, la deuxième droite étant la droite qui passe à la fois par le centre de la zone activable déterminée et par la dernière position courante du curseur avant le déplacement considéré par le procédé, est inférieur à un seuil fixe prédéterminé. De manière préférentielle, dans le premier type de mode de fonctionnement, lorsque plusieurs zones activables remplissent les conditions d'attraction, le curseur est effectivement attiré vers la zone activable qui minimise l'angle entre la première droite et la deuxième droite. Ce premier type de mode de fonctionnement sera décrit plus précisément en liaison avec les figures 1 à 6, tout comme le deuxième type de mode de fonctionnement lequel est le type de mode de fonctionnement préférentiel de l'invention.

Dans le deuxième type de mode de fonctionnement préférentiel de l'invention, la deuxième condition est remplie seulement si une portion de la direction du déplacement du curseur a une intersection non vide avec la zone activable déterminée considérée. La deuxième condition est ainsi rendue plus sélective et la réalisation des étapes d'attraction conditionnelle rendue plus efficace et plus pratique. De préférence, la deuxième condition est remplie seulement si une portion, postérieure à une position intermédiaire qui est comprise entre la position courante du curseur à la fin du déplacement précédent après traitement par le procédé et la position déterminée ou bien encore qui est confondue avec l'une des dites positions, de la direction du déplacement du curseur a une intersection non vide avec la zone activable déterminée considérée. Ainsi, les attractions dans des zones activables situées vers l'arrière du déplacement du curseur, attractions qui sont gênantes pour la sensation de l'opérateur humain, sont évitées. La position intermédiaire est avantageusement confondue avec la position courante du curseur à la fin du déplacement précédent après traitement par le procédé. Ainsi, les calculs réalisés par le procédé sont rendus plus simples. Afin d'éviter toute possibilité de retour intempestif vers la zone activable dans laquelle le curseur se trouve et que ledit curseur veut quitter, de manière avantageuse, la zone activable déterminée vers laquelle le curseur peut être attiré peut être toute zone activable à laquelle une zone d'attraction est associée, exception faite de la dernière zone activable vers laquelle le curseur a été effectivement attiré si le curseur se trouve encore dans ladite dernière zone activable au début du déplacement considéré par le procédé. Ce deuxième type de mode de fonctionnement avec toutes ses options préférentielles décrites précédemment va maintenant être décrit plus précisément, tout comme le premier type de mode de fonctionnement, en liaison avec les figures 1 à 6.

Les figures 1 à 3 représentent schématiquement trois diagrammes explicatifs de deux types de mode de fonctionnement différents du procédé selon l'invention. Un écran 12 comporte une ou plusieurs zones activables avec les zones d'attraction associées correspondantes. Pour des raisons de simplicité, une seule zone activable 10 avec la zone d'attraction 11 qui lui est associée, est représentée sur les figures 1 à 3. Soit C le centre de la zone activable 10. La position 1 est la position du curseur au début du déplacement du curseur considéré par le procédé selon l'invention. La position 2 est la position déterminée qui peut être considérée comme la position vers laquelle le curseur se déplace ou tend à se déplacer. La position 3 est la position vers laquelle le curseur est attiré lorsque l'étape d'attraction conditionnelle est effectivement réalisée. Soit d la droite passant par les positions 1 et 2. Soit d' la droite passant par la position 1 et par le centre C de la zone activable 10. Soit α l'angle que font entre elles les deux droites d et d'. Analysons successivement le déroulement de l'étape d'attraction conditionnelle dans le cas du premier type de mode de fonctionnement puis du deuxième type de mode de fonctionnement, le deuxième type de mode de fonctionnement étant plus précis que le premier, le deuxième type de mode de fonctionnement présente en effet un fonctionnement précis quelle que soit la distance entre la position 1 et le centre C, tandis que la précision du premier type de mode de fonctionnement, soit est correcte pour les positions 1 proches de la zone activable 10 et se dégrade à mesure que la distance entre la position 1 et le centre C augmente, soit est incorrecte pour les positions 1 proches de la zone activable 10. En effet, il est difficile de trouver pour l'angle α un seuil qui convienne à la fois aux positions 1 proches et lointaines de la zone activable 10.

Le fonctionnement du procédé selon l'invention dans le premier type de mode de fonctionnement est maintenant analysé plus précisément. Dans la figure 1, la position déterminée 2 est située dans la zone d'attraction 11, la première condition est donc remplie. L'angle α est supérieur au seuil prédéterminé, la deuxième condition n'est donc pas remplie. L'étape d'attraction conditionnelle n'est par conséquent pas réalisée effectivement et le curseur reste en position 2. Dans la figure 2, la position déterminée 2 est située en dehors de la zone d'attraction 11, la première condition n'est donc pas remplie. L'angle α est inférieur au seuil prédéterminé, la deuxième condition est donc remplie. L'étape d'attraction conditionnelle n'est par conséquent pas réalisée effectivement et le curseur reste en position 2. Dans la figure 3, la position déterminée 2 est située dans la zone d'attraction 11, la première condition est donc remplie. L'angle α est inférieur au seuil prédéterminé, la deuxième condition est donc remplie. L'étape d'attraction conditionnelle est par conséquent réalisée effectivement et le curseur est placé en position 3, la position 3 étant l'intersection entre la droite d et une partie prédésignée de la zone activable 10. La droite d' passant par le centre C et l'angle α ne sont utilisées que dans le premier type de mode de fonctionnement.

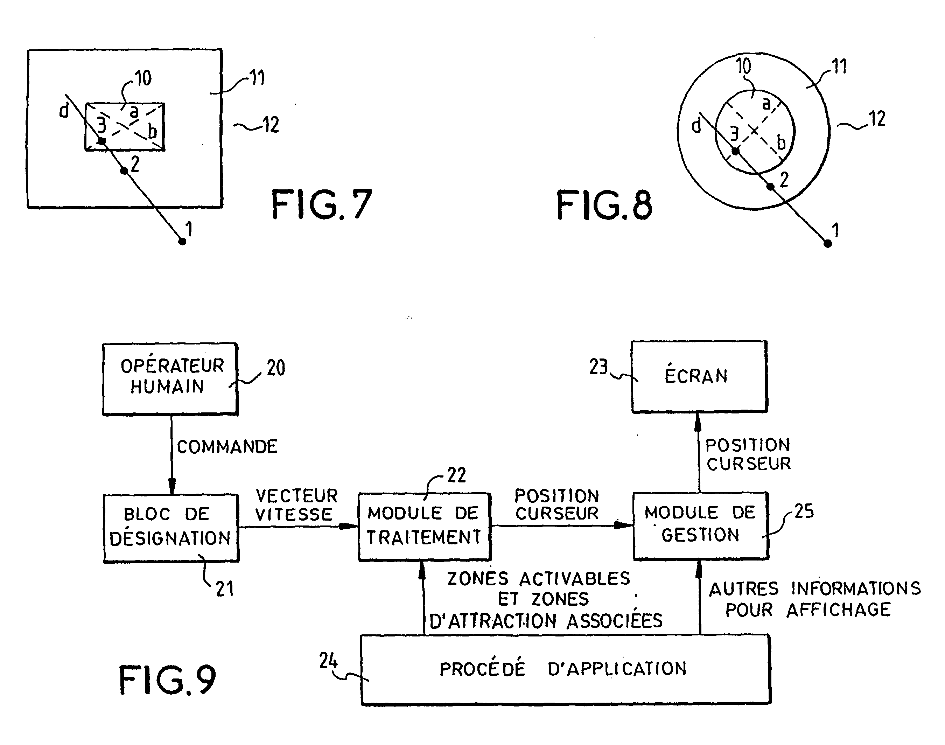

La partie prédésignée peut être n'importe quelle partie de la zone activable 10 couvrant suffisamment la zone activable 10. Des réalisations préférentielles pour la partie prédésignée des zones activables est décrite en liaison avec les figures 7 et 8. La présence de cette partie prédésignée permet, lorsque les déplacements du curseur se succèdent dans une partie de l'écran qui est dense en zones activables et en zones d'attraction associées, de rendre le mouvement du curseur plus droit entre le premier déplacement et le dernier déplacement, évitant ainsi un détour en ligne brisée ce qui serait le cas si le curseur, lorsqu'effectivement attiré dans la zone activable 10, était systématiquement placé sur le centre C de la zone activable 10.

Le fonctionnement du procédé selon l'invention dans le deuxième type de mode de fonctionnement préférentiel est maintenant analysé plus précisément. Dans la figure 1, la position déterminée 2 est située dans la zone d'attraction 11, la première condition est donc remplie. La droite d ne présente pas d'intersection non vide avec la zone activable 10, c'est-à-dire présente une intersection vide avec la zone activable 10, la deuxième condition n'est donc pas remplie. L'étape d'attraction conditionnelle n'est par conséquent pas réalisée effectivement et le curseur reste en position 2. Dans la figure 2, la position déterminée 2 est située en dehors de la zone d'attraction 11, la première condition n'est donc pas remplie. La droite d présente une intersection non vide avec la zone activable 10, la deuxième condition est donc remplie. L'étape d'attraction conditionnelle n'est par conséquent pas réalisée effectivement et le curseur reste en position 2. Dans la figure 3, la position déterminée 2 est située dans la zone d'attraction 11, la première condition est donc remplie. La droite d présente une intersection non vide avec la zone activable 10, la deuxième condition est donc remplie. L'étape d'attraction conditionnelle est par conséquent réalisée effectivement et le curseur est placée en position 3, la position 3 étant l'intersection entre la droite d et une partie prédésignée de la zone activable 10. Au cours de la description précédente du deuxième type de mode de fonctionnement, c'est de préférence la partie de la droite d postérieure à la position 1, c'est-à-dire la demi-droite partant de la position 1 et dirigée de la position 1 vers la position 2, qui devait présenter une intersection non vide avec la zone activable 10 déterminée.

Les figures 4 à 6 représentent schématiquement trois autres diagrammes explicatifs du deuxième type de mode de fonctionnement préférentiel du procédé selon l'invention.

Dans la figure 4, la position de départ 1 est relativement loin de la zone activable 10. Lors d'un premier déplacement, le curseur se déplace de la position 1 vers la position 2, pour rester en position 2 sans qu'aucune attraction ne soit effectivement réalisée. En effet, si la première condition est remplie, car la position 2 est située dans la zone d'attraction 11, la deuxième condition ne l'est pas, car l'intersection entre la droite d et la zone activable 10 est vide. Toutefois, après ce premier déplacement grossier du curseur, une petite commande de l'opérateur humain vers le bas symbolisée par la flèche D, même relativement imprécise, amènera directement le curseur en position 3, soit naturellement soit par attraction effective dans la zone activable 10. En l'absence du procédé selon l'invention, plusieurs tâtonnements de l'opérateur humain risqueraient d'être nécessaires, car ledit opérateur, s'il n'est pas très précis, risque pendant plusieurs tentatives, soit de s'arrêter avant la zone activable 10, soit de la dépasser, avant de pouvoir amener le curseur dans ladite zone activable 10 pour pouvoir ensuite activer ladite zone activable 10.

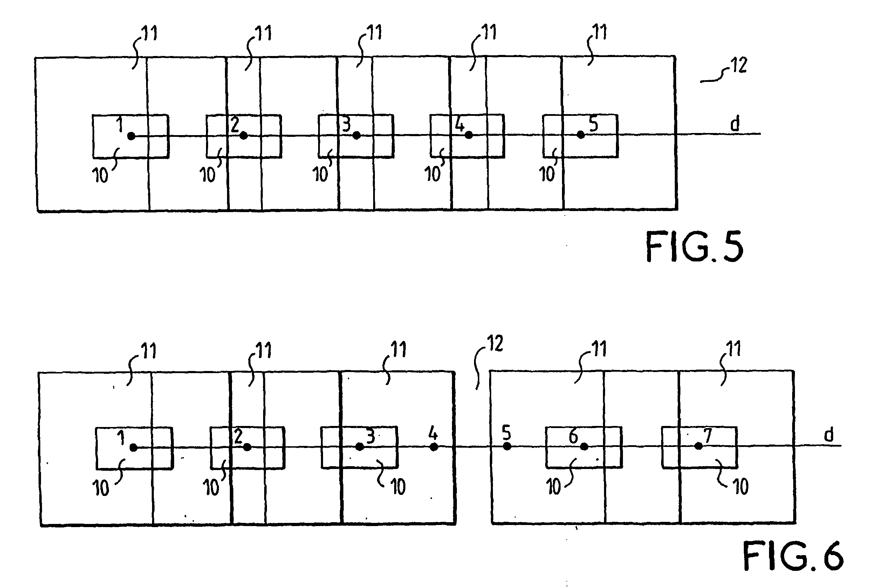

De préférence, après une attraction effective du curseur vers une zone activable déterminée, le curseur est bloqué pendant un délai normal de blocage compatible avec une réaction de l'opérateur humain lui permettant d'arrêter le déplacement du curseur dans ladite zone activable déterminée. Ainsi, l'opérateur humain peut fournir une commande d'activation de la zone activable dans laquelle se trouve le curseur avant que ladite zone activable n'ait été dépassée. Le délai normal de blocage est avantageusement compris entre 250ms et 350ms. Le délai normal de blocage vaut par exemple environ 300ms. Préférentiellement, après attraction effective du curseur, en cas de maintien du déplacement du curseur par l'opéràteur humain, le délai normal de blocage est réduit à un délai réduit de blocage pour l'attraction effective suivante si celle-ci succède immédiatement à l'attraction effective qui la précède. Le délai réduit de blocage est avantageusement compris entre 100ms et 150ms. Le délai réduit de blocage vaut par exemple environ 125ms. Une utilisation adéquate des délais de blocage normal et réduit permet de rendre le déplacement du curseur plus fluide dans les parties d'écran à haute densité de zones activables tout en évitant le dépassement involontaire d'une zone activable, comme expliqué plus précisément au niveau des figures 5 et 6.

Dans la figure 5, le curseur est amené à se déplacer dans une partie de l'écran 12 qui est dense en zones activables 10. Un recouvrement partiel des zones d'attraction 11 contiguës permet un fonctionnement de type discret en ce sens qu'à partir de la position 1, chaque petite commande vers la droite de la part de l'opérateur placera le curseur sur la zone activable suivante, indépendamment de son intensité, à condition que le délai de blocage soit écoulé : une première commande vers la droite place le curseur en position 2, une deuxième commande vers la droite place le curseur en position 3, etc... Les zones d'attraction peuvent se recouvrir partiellement entre elles mais ne sont pas incluses les unes dans les autres. A partir de la position 3 incluse, si l'opérateur maintient continûment sa commande de déplacement du curseur vers la droite, le délai de blocage sera le délai réduit de blocage, afin de pas parcourir les zones activables 1 à 5 trop lentement, ce qui risquerait d'agacer l'opérateur humain.

Dans la figure 6, le fonctionnement est semblable à celui de la figure 5, mais à partir de la position 4, comme aucune attraction effective n'est réalisée au niveau de la position 4, le délai de blocage redevient le délai normal de blocage jusqu'à la position 5 incluse où une attraction étant effectivement réalisée vers la position 6, le délai de blocage devient à nouveau le délai réduit de blocage après l'attraction et cela jusqu'à la position 7 incluse. Ce fonctionnement permet d'éviter de dépasser la position 6 sans laisser à l'opérateur humain le temps d'y arrêter le curseur.

De préférence, lorsque le curseur est automatiquement placé sur une zone activable déterminée lors de l'étape d'attraction conditionnelle, l'endroit de la zone activable déterminée sur lequel le curseur est placé est l'intersection entre la direction du déplacement du curseur et une partie prédésignée de la zone activable déterminée. Avantageusement, chaque zone activable est de forme rectangulaire et la partie prédésignée consiste en les deux diagonales de la forme rectangulaire notés a et b sur la figure 7 et représentées en traits pointillés. Les figures 7 à 8 représentent deux types de forme de zones activables utilisées par un procédé selon l'invention. Les figures 7 et 8 représentent un curseur se déplaçant de la position 1 vers la position 2 tout en remplissant les conditions de l'étape d'attraction conditionnelle. Le curseur est donc attiré dans la zone activable 10. Le curseur est alors placé sur la position 3, laquelle est l'intersection entre les diagonales a et b d'une part et la droite d d'autre part. La figure 7 représente une zone activable 10 ayant une forme rectangulaire. La figure 8 représente une zone activable 10 ayant une forme circulaire.

De préférence, toutes les zones d'attraction situées sur une même fenêtre de l'écran ont la même taille, ce qui permet de procurer à l'opérateur humain la même sensation lorsqu'il se déplace d'une zone activable à une autre sur une même fenêtre d'écran. Avantageusement, chaque zone d'attraction est environ une dizaine de fois plus étendue que la zone activable qui lui est associée, c'est-à-dire typiquement de cinq à quinze fois plus étendue. La zone d'attraction entoure de manière sensiblement uniforme la zone activable à laquelle elle est associée, comme sur les figures 7 et 8 par exemple.

De préférence, en l'absence d'attraction effective du curseur, la position déterminée est périodiquement évaluée par le procédé avec une période d'échantillonnage prédéterminée. Le module de traitement mettant en oeuvre le procédé selon l'invention est alors un dispositif échantillonné. Périodiquement, le procédé selon l'invention réalise l'étape d'attraction conditionnelle, c'est-à-dire vérifie si les conditions pour réaliser une attraction effective sont remplies et réalise effectivement ladite attraction si les conditions sont remplies, le déplacement étant considéré par le procédé, comme commençant à partir de la position courante de départ du curseur qui était la position atteinte par le curseur à la fin du déplacement précédent, attraction précédente incluse le cas échéant, et aboutissant à la position déterminée pour ce déplacement qui sera aussi la position courante du curseur au début du déplacement suivant en l'absence d'attraction effective du curseur dans une zone activable ; en présence d'attraction effective du curseur dans une zone activable, la position du curseur à l'issue de ladite attraction est différente de ladite position déterminée. Dans ce cas, c'est-à-dire dans le cas d'un module de traitement échantillonné, chaque déplacement est délimité par une position de départ d'une part et une position déterminée vers laquelle le curseur se dirige ou semble se diriger d'autre part : la direction du déplacement du curseur est alors de préférence la droite passant à la fois par la position de départ et par la position déterminée.

La position déterminée est préférentiellement une position évaluée par le procédé à partir d'une information de vecteur vitesse de déplacement du curseur laquelle information provient d'une commande d'un opérateur humain. En effet, une attraction avec un dispositif donnant une information de distance comme une souris par exemple, donnerait une sensation bizarre à l'opérateur humain qui aurait l'impression d'un manque de correspondance entre le déplacement du curseur et la distance donnée par sa commande, par l'intermédiaire d'une souris par exemple, ce qui serait moins pratique et moins efficace pour l'opérateur humain. Tandis qu'avec un levier de commande multidirectionnel, l'opérateur humain, ne donnant qu'une direction et une intensité correspondant à une vitesse, ne sera pas perturbé ou à tout le moins sera moins perturbé par le phénomène d'attraction du curseur dans une zone activable. Dans le cas où la commande de l'opérateur humain se traduit par une information de vecteur vitesse, la position déterminée au cours d'une période donnée est préférentiellement obtenue par l'ajout, à la position courante du curseur à la fin de la période précédente, d'un vecteur déplacement correspondant au produit du vecteur vitesse de déplacement par la période d'échantillonnage. La direction du déplacement du curseur évaluée par le procédé est alors avantageusement la droite passant à la fois par la position déterminée et par la position du curseur à la fin de la période précédente. De manière avantageuse, la dimension de la zone d'attraction est supérieure à la portion de droite comprise entre la position du curseur à la fin de la période précédente et la position déterminée, c'est-à-dire au segment compris entre les positions 1 et 2 en se référant aux figures 1 à 8, afin d'empêcher l'opérateur humain de dépasser sans pouvoir s'y arrêter une zone activable et sa zone d'attraction associée par une commande d'une grande intensité, c'est-à-dire par exemple par un mouvement rapide allant jusqu'en butée sur un levier multidirectionnel dans l'une de ses directions.

En cas de conflit, c'est-à-dire lorsque plusieurs zones activables remplissent les conditions d'attraction, le curseur est préférentiellement effectivement attiré vers la zone activable qui est la plus proche de la position déterminée. La distance considérée étant par exemple la distance entre ladite position déterminée et le centre de ladite zone activable. Cependant, d'autres critères de règlement de conflit entre plusieurs attractions potentielles sont possibles, par exemple le critère consistant à choisir la zone activable associée à la première zone d'attraction se trouvant sur la trajectoire du déplacement du curseur.

Le procédé selon l'invention se superpose au procédé normal de gestion du déplacement du curseur tout en restant indépendant dudit procédé normal de gestion du déplacement du curseur, notamment lorsque le procédé selon l'invention est implémenté à l'aide d'un programme informatique. Le curseur est la plupart du temps géré par le procédé normal de gestion sauf lorsqu'il remplit les conditions d'attraction, le curseur étant alors soumis au procédé de traitement du déplacement du curseur selon l'invention lequel est chargé de réaliser effectivement l'attraction du curseur vers une zone activable déterminée.

Un exemple préférentiel de procédé selon l'invention va maintenant être décrit en détail. Ce procédé réalise continuellement, sauf en cas d'initialisation du cycle, le cycle constitué par la succession suivante d'opérations élémentaires :
- si le curseur n'est pas bloqué :
   - calcul d'une position temporaire Pt du curseur (par exemple position 2 sur les figures 1 à 8), la position temporaire Pt étant la position déterminée vers laquelle le curseur se déplace au cours du cycle considéré, à partir d'une part de la position courante Pp du curseur du cycle précédent (par exemple la position 1 sur les figures 1 à 8) et d'autre part d'un vecteur déplacement du curseur (par exemple vecteur reliant la position 1 à la position 2 sur les figures 1 à 8) obtenu à partir d'une commande d'un opérateur humain (par exemple actionnement du levier multidirectionnel) ;
   - autorisation d'attraction vers chaque zone activable pour laquelle, d'une part la position temporaire Pt est incluse dans ladite zone activable (10) ou dans la zone d'attraction associée correspondant à ladite zone activable et d'autre part la portion (par exemple la demi-droite partant de la position 1 et dirigée de la position 1 vers la position 2 sur les figures 1 à 8), postérieure à la position courante Pp du cycle précédent, de la droite passant par les positions temporaires Pp et Pt intercepte ladite zone activable, exception faite de la dernière zone activable vers laquelle le curseur a été effectivement attiré si la position temporaire Pp du cycle précédent se trouve encore dans ladite dernière zone activable au début du déplacement considéré dans le présent cycle ;
   - si l'attraction est autorisée vers au moins une zone activable :
      - pour chaque zone activable vers laquelle l'attraction est autorisée, calcul de la distance comprise entre la position temporaire Pt et le centre de gravité (par exemple le centre C sur les figures 1 à 8) de ladite zone activable, et sélection de la zone activable qui minimise ladite distance ;
      - détermination d'une position finale PF du curseur (par exemple la position 3 sur les figures 1 à 8) qui soit comprise dans l'intersection entre la zone activable sélectionnée et la droite passant par les positions temporaires Pt et Pp ;
      - affectation de la position finale PF à la position courante du curseur ;
      - blocage du curseur ;
      - passage au cycle suivant ;
   - si aucune attraction vers une zone activable n'est autorisée :
      - affectation du délai normal de blocage au délai de blocage ;
      - affectation de la position temporaire Pt à la position courante du curseur ;
      - passage au cycle suivant ;
- si le curseur est bloqué :
   - affection de la position finale PFp du cycle précédent à la position courante du curseur ;
   - incrémentation du compteur permettant de compter le temps de blocage jusqu'à ce que le temps de blocage dépasse le délai de blocage ou jusqu'à ce que la commande de l'opérateur humain soit modifiée :
      - déblocage du curseur ;
      - affectation du délai réduit de blocage au délai de blocage ;
      - remise à zéro du compteur ;
      - passage au cycle suivant ;

l'initialisation du cycle comportant une opération élémentaire de déblocage du curseur, une opération élémentaire d'affectation du délai normal de blocage au délai de blocage, une opération de remise à zéro du compteur, ainsi qu'une affectation de la position temporaire du curseur d'une part à la position courante du curseur et d'autre part à la position finale du curseur. L'initialisation est avantageusement réalisée lors de la mise sous tension de l'écran ou lors d'un changement de fenêtre à l'écran, c'est-à-dire lorsque le déplacement du curseur est commandé par un procédé d'application et non par l'opérateur humain.

L'objet de la présente invention concerne le procédé de traitement selon l'invention tel que décrit dans toute la partie du texte qui précède, ainsi que le module de traitement permettant la mise en oeuvre dudit procédé. L'objet de la présente invention concerne aussi le système comportant un tel module de traitement et un écran associé audit module de traitement. L'écran est de préférence un écran de console d'aéronef, car les commandes de l'opérateur humain peuvent y être particulièrement imprécises compte tenu des conditions de vol de l'aéronef, que cet aéronef soit civil ou militaire, notamment lors de turbulences atmosphériques. Le procédé selon l'invention s'applique de manière particulièrement avantageuse aux fenêtres de navigation comportant des balises, car les dites balises sont des zones activables de taille relativement petite. Dans le cas d'une fenêtre de navigation, l'aspect temporel dans le procédé de traitement selon l'invention n'est pas critique car le traitement n'est pas un traitement à réaliser en temps réel.

La figure 9 représente un découpage en blocs fonctionnels d'un système complet préférentiel de désignation comportant un module de traitement mettant en oeuvre le procédé de traitement selon l'invention. Le système complet de désignation comporte un bloc de désignation 21 transmettant la commande de l'opérateur humain 20 au module de traitement 22, un module de traitement 22 mettant en oeuvre le procédé de traitement selon l'invention, un ou plusieurs modules d'application 24, un module de gestion 25 du curseur et de l'écran, le module de gestion 25 mettant en oeuvre le procédé de gestion normal du curseur auquel le procédé de traitement selon l'invention se superpose, et un écran 23 de visualisation sur lequel évolue le curseur. L'opérateur humain 20, extérieur au système de désignation, est noté 20. L'opérateur humain 20 fournit une commande au bloc de désignation 21 qui fournit une information de vecteur vitesse au module de traitement 22. A l'aide de l'emplacement et de l'étendue des zones activables et des zones d'attraction associées, fournis par le ou les modules d'application 24 au module de traitement 22, le module de traitement 22 fournit en cas d'attraction effective une position curseur au module de gestion 25 qui fournit à l'écran 23 une position curseur qui est en fait déterminée par le module de gestion 25 en cas d'absence d'attraction effective et qui est en fait déterminée par le module de traitement 22 en cas de présence d'une attraction effective. Le ou les modules d'application 24 fournissent également d'autres informations, pour affichage, au module de gestion 25.

Le bloc de désignation 21 a pour rôle de transmettre les commandes de l'opérateur humain 20 au module de traitement 22. Le bloc de désignation est de préférence un levier de commande multidirectionnel avec un bouton de validation. Ledit levier fournit alors avantageusement au module de traitement 22 une information de vecteur vitesse pour le déplacement du curseur. Ce type de levier présente généralement une loi de variation de l'information vecteur vitesse fournie en fonction de la commande de l'opérateur humain 20 qui doit être réglée de manière très fine pour que l'opérateur humain 20 utilise correctement le levier multidirectionnel cette loi de variation peut, lorsque le procédé selon l'invention est utilisé, être réglée de manière plus grossière sans perturber de manière sensible l'utilisation du levier multidirectionnel par l'opérateur humain 20.

Dans un premier mode de réalisation optionnel, ledit levier multidirectionnel comporte un dispositif type roue codeuse lequel dispositif permet un mode de fonctionnement supplémentaire ne prenant pas en compte les zones d'attraction mais consistant à permettre la rotation, autour de la position courante du curseur, de quatre demi-droites formant un repère orthogonal sur l'écran, une zone activable interceptée par l'une des demi-droites étant sélectionnable par simple pression sur ledit levier dans la direction correspondant à ladite demi-droite.

Dans un deuxième mode de réalisation optionnel, ledit levier multidirectionnel comporte un dispositif type roue codeuse lequel dispositif permet un mode de fonctionnement supplémentaire consistant à permettre la rotation, autour de la position courante du curseur, de quatre demi-droites formant un repère orthogonal sur l'écran, une zone activable étant sélectionnable par simple pression sur ledit levier dans la direction correspondant à l'une des demi-droites à condition que ladite demi-droite intercepte la zone d'attraction associée à ladite zone activable.

## Revendications

1. Procédé de traitement du déplacement d'un curseur sur un écran (12) qui comporte une ou plusieurs zones activables (10) par le curseur, au moins une zone activable (10) étant entourée par une zone d'attraction (11) qui lui est associée, le procédé réalisant, lors du déplacement du curseur vers une position déterminée (2) qui est effective ou fictive, une étape d'attraction conditionnelle plaçant automatiquement le curseur sur une zone activable déterminée (10) seulement si une première condition est remplie, la première condition étant remplie si la position déterminée est située dans la zone d'attraction (11) associée à la zone activable déterminée (10), le procédé étant **caractérisé en ce que** l'étape d'attraction conditionnelle est précédée d'une étape d'évaluation évaluant la direction (d) du déplacement du curseur, et **en ce que** l'étape d'attraction conditionnelle est réalisée seulement si, en plus de la première condition, une deuxième condition est également remplie, la deuxième condition étant remplie seulement si une portion de la droite (d) représentant le déplacement du curseur est située au voisinage de la zone activable déterminée (10).

2. Procédé selon la revendication 1, **caractérisé en ce que** la première condition est remplie si et seulement si la position déterminée est située dans la zone d'attraction (11) associée à la zone activable déterminée (10) ou dans la zone activable déterminée (10).

3. Procédé selon l'une quelconque des revendications précédentes, **caractérisé en ce que** la deuxième condition est remplie seulement si l'angle (α) que font entre elles une première droite (d) et une deuxième droite (d'), la première droite (d) étant parallèle à la direction (d) du déplacement du curseur, la deuxième droite (d') étant la droite qui passe à la fois par le centre (C) de la zone actlvable déterminée (10) et par la dernière position courante (1) du curseur avant le déplacement considéré par le procédé, est inférieur à un seuil fixe prédéterminé.

4. Procédé selon la revendication 3, **caractérisé en ce que**, lorsque plusieurs zones activables (10) remplissent les conditions d'attraction, le curseur est effectivement attiré vers la zone activable (10) qui minimise l'angle (α) entre la première droite (d) et la deuxième droite (d').

5. Procédé selon l'une quelconque des revendications précédentes, **caractérisé en ce que** la deuxième condition est remplie seulement si une portion de la droite (d) représentant le déplacement du curseur a une intersection non vide avec la zone activable déterminée (10).

6. Procédé selon la revendication 5, **caractérisé en ce que** la deuxième condition est remplie seulement si une portion, postérieure à une position intermédiaire qui est comprise entre la position courante (1) du curseur à la fin du déplacement précédent après traitement par le procédé et la position déterminée (2) ou qui est confondue avec l'une des dites positions (1, 2), de la droite (d) représentant le déplacement du curseur a une intersection non vide avec la zone activable déterminée (10).

7. Procédé selon la revendication 6, **caractérisé en ce que** la position intermédiaire est confondue avec la position courante (1) du curseur à la fin du déplacement précédent après traitement par la procédé.

8. Procédé selon l'une quelconque des revendications 5 à 7, **caractérisé en ce que** la zone activable déterminée (10) vers laquelle le curseur peut être attiré peut être toute zone activable (10) à laquelle une zone d'attraction (11) est associée, exception faite de la dernière zone activable vers laquelle le curseur a été effectivement attiré si le curseur se trouve encore dans ladite dernière zone activable au début du déplacement considéré dans le procédé.

9. Procédé selon l'une quelconque des revendications précédentes, **caractérisé en ce que**, lorsque le curseur est automatiquement placé sur une zone activable déterminée (10) lors de l'étape d'attraction conditionnelle, l'endroit (3) de la zone activable déterminée sur lequel le curseur est placé est l'intersection entre la droite (d) représentant le déplacement du curseur et une partie prédésignée (a et b) de la zone activable déterminée (10).

10. Procédé selon la revendication 9, **caractérisé en ce que** chaque zone activable (10) est de forme rectangulaire et **en ce que** la partie prédésignée (a et b) consiste en les deux diagonales (a et b) de la forme rectangulaire.

11. Procédé selon l'une quelconque des revendications précédentes, **caractérisé en ce que** toutes les zones d'attraction (11) situées sur une même fenêtre de l'écran (12) ont la même taille.

12. Procédé selon l'une quelconque des revendications précédentes, **caractérisé en ce qu'**une zone d'attraction (11) est environ une dizaine de fois plus étendue que la zone activable (10) qui lui est associée.

13. Procédé selon l'une quelconque des revendications précédentes, **caractérisé en ce que**, en l'absence d'attraction effective du curseur, la position déterminée (2) est périodiquement évaluée par le procédé avec une période d'échantillonnage prédéterminée.

14. Procédé selon l'une quelconque des revendications précédentes, **caractérisé en ce que** la position déterminée (2) est une position évaluée par le procédé à partir d'une information de vecteur vitesse de déplacement du curseur laquelle information provient d'une commande d'un opérateur humain (20).

15. Procédé selon les revendications 13 et 14, **caractérisé en ce que** la position déterminée (2) est obtenue par l'ajout, à la position courante (1) du curseur à la fin de la période précédente, d'un vecteur déplacement correspondant au produit du vecteur vitesse de déplacement par la période d'échantillonnage.

16. Procédé selon la revendication 15, **caractérisé en ce que** la droite (d) représentant le déplacement du curseur évaluée par le procédé est la droite passant à la fois par la position déterminée (2) et par la position courante (1) du curseur à la fin de la période précédente.

17. Procédé selon la revendication 16, **caractérisé en ce que** la dimension de la zone d'attraction (11) est supérieure à la portion de droite comprise entre la position courante (1) du curseur à la fin de la période précédente et la position déterminée (2).

18. Procédé selon l'une quelconque des revendications précédentes, **caractérisé en ce que**, après une attraction effective du curseur, la curseur est bloqué pendant un délai normal de blocage compatible avec une réaction de l'opérateur humain (20) lui permettant d'arrêter le déplacement du curseur.

19. Procédé selon la revendication 18, **caractérisé en ce que** le délai normal de blocage est compris entre 250ms et 350ms.

20. Procédé selon l'une quelconque des revendications 18 à 19, **caractérisé en ce que**, après attraction effective du curseur, en cas de maintien du déplacement du curseur par l'opérateur humain (20), le délai normal de blocage est réduit à un délai réduit de blocage pour l'attraction effective suivante si celle-ci succède immédiatement à l'attraction effective qui la précède.

21. Procédé selon la revendication 20, **caractérisé en ce que** le délai réduit de blocage est compris entre 100ms et 150ms.

22. Procédé selon l'une quelconque des revendications précédentes, **caractérisé en ce que**, lorsque plusieurs zones activables (10) remplissent tes conditions d'attraction, le curseur est effectivement attiré vers la zone activable (10) qui est la plus proche de la position déterminée (2).

23. Procédé selon l'une quelconque des revendications précédentes, **caractérisé en ce que** le procédé se superpose au procédé normal de gestion du déplacement du curseur tout en restant indépendant du procédé normal de gestion du déplacement du curseur.

24. Procédé selon l'une quelconque des revendications précédentes, **caractérisé en ce que** le procédé réalise continuellement, sauf en cas d'initialisation du cycle, le cycle constitué par la succession suivante d'opérations élémentaires :
- si le curseur n'est pas bloqué :
- calcul d'une position temporaire Pt du curseur, la position temporaire Pt étant la position déterminée (2) vers laquelle le curseur se déplace au cours du cycle considéré, à partir d'une part de la position (1) courante Pp du curseur du cycle précédent et d'autre part d'un vecteur déplacement du curseur obtenu à partir d'une commande d'un opérateur humain (20) ;
- autorisation d'attraction vers chaque zone activable (10) pour laquelle, d'une part la position temporaire Pt est incluse dans ladite zone activable (10) ou dans la zone d'attraction (11) associée correspondant à ladite zone activable (10) et d'autre part ta portion, postérieure à la position courante Pp du cycle précédent, de la droite (d) passant par les positions temporaires Pp et Pt intercepte ladite zone activable (10), exception faite de la dernière zone activable vers laquelle le curseur a été effectivement attiré si la position temporaire Pp du cycle précédent se trouve encore dans ladite dernière zone activable au début du déplacement considéré dans le présent cycle ;
- si l'attraction est autorisée vers au moins une zone activable :
- pour chaque zone activable (10) vers laquelle l'attraction est autorisée, calcul de la distance comprise entre la position temporaire Pt et le centre de gravité (C) de -ladite zone activable, et sélection de la zone activable (10) qui minimise ladite distance ;
- détermination d'une position (3) finale PF du curseur qui soit comprise dans l'intersection entre la zone activable sélectionnée (10) et la droite (d) passant par les positions temporaires Pt et Pp ;
- affectation de la position finale PF à la position courante du curseur ;
- blocage du curseur ;
- passage au cycle suivant ;
- si aucune attraction vers une zone activable n'est autorisée :
- affectation du délai normal de blocage au délai de blocage ;
- affectation de la position temporaire Pt à la position courante du curseur ;
- passage au cycle suivant ;
- si le curseur est bloqué :
- affection de la position finale PFp du cycle précédent à la position courante du curseur ;
- incrémentation du compteur permettant de compter le temps de blocage jusqu'à ce que le temps de blocage dépasse le délai de blocage ou jusqu'à ce que la commande de l'opérateur humain (20) soit modifiée :
- déblocage du curseur ;
- affectation du délai réduit de blocage au délai de blocage ;
- remise à zéro du compteur ;
- passage au cycle suivant ;
l'initialisation du cycle comportant une opération élémentaire de déblocage du curseur, une opération élémentaire d'affectation du délai normal de blocage au délai de blocage, une opération de remise à zéro du compteur.

25. Procédé selon la revendication 24, **caractérisé en ce que** l'initialisation est lorsque lors de la mise sous tension de l'écran (12) ou lors d'un changement de fenêtre à l'écran (12).

26. Système de commande du déplacement d'un curseur sur un écran (12), **caractérisé en ce qu'**il comporte un module (22) de traitement comprenant des moyens adaptés pour réaliser les étapes du procédé selon l'une des revendications précédentes, l'écran (12) étant associé audit module (22) de traitement.

27. Système selon la revendication 26, **caractérisé en ce que** l'écran (23) est un écran de console d'aéronef.

28. Système selon la revendication 27, **caractérisé en ce que** le module (22) de traitement gère au moins une fenêtre de navigation comportant des balises.

29. Système selon l'une quelconque des revendications 26 à 28, **caractérisé en ce qu'**il comporte aussi un bloc (21) de désignation transmettant les commandes de l'opérateur humain (20) au module (22) de traitement.

30. Système selon la revendication 29, **caractérisé en ce que** le bloc (21) de désignation est un levier de commande multidirectionnel avec un bouton de validation, ledit levier fournissant au module (22) de traitement une information de vecteur vitesse pour le déplacement du curseur.

31. Système selon la revendication 30, **caractérisé en ce que** ledit levier comporte un dispositif type roue codeuse lequel dispositif permet un mode de fonctionnement supplémentaire ne prenant pas en compte les zones d'attraction (11) mais consistant à permettre la rotation, autour de la position courante du curseur, de quatre demi-droites formant un repère orthogonal sur l'écran (23), une zone activable (10) interceptée par l'une des demi-droites. étant sélectionnable par simple pression sur ledit levier dans la direction correspondant à ladite demi-droite.

32. Système selon la revendication 30, **caractérisé en ce que** ledit levier comporte un dispositif type roue codeuse lequel dispositif permet un mode de fonctionnement supplémentaire consistant à permettre la rotation, autour de la position courante du curseur, de quatre demi-droites formant un repère orthogonal sur l'écran (23), une zone activable (10) étant sélectionnable par simple pression sur ledit levier dans la direction correspondant à l'une des demi-droites à condition que ladite demi-droite intercepte la zone d'attraction (11) associée à ladite zone activable (10),

## Patentansprüche

1. Verfahren zur Verarbeitung der Verschiebung eines Cursors auf einem Bildschirm (12), der eine oder mehrere vom Cursor aktivierbare Zonen (10) aufweist, wobei mindestens eine aktivierbare Zone (10) von einer ihr zugeordneten Anziehungszone (11) umgeben ist, wobei das Verfahren bei der Verschiebung des Cursors in eine bestimmte Stellung (2), die real oder fiktiv ist, einen Schritt der bedingten Anziehung durchführt, in dem den Cursor nur dann automatisch in eine bestimmte aktivierbare Zone (10) gebracht wird, wenn eine erste Bedingung erfüllt ist, wobei die erste Bedingung erfüllt ist, wenn die bestimmte Position sich in der der bestimmten aktivierbaren Zone (10) zugeordneten Anziehungszone (11) befindet, wobei das Verfahren **dadurch gekennzeichnet ist, dass** vor dem Schritt der bedingten Anziehung ein Berechnungsschritt liegt, der die Richtung (d) der Verschiebung des Cursors berechnet, und dass der Schritt der bedingten Anziehung nur dann durchgeführt wird, wenn zusätzlich zur ersten Bedingung eine zweite Bedingung ebenfalls erfüllt ist, wobei die zweite Bedingung nur erfüllt ist, wenn ein Abschnitt der die Verschiebung des Cursors darstellenden Geraden (d) sich in der Nähe der bestimmten aktivierbaren Zone (10) befindet.

2. Verfahren nach Anspruch 1, **dadurch gekennzeichnet, dass** die erste Bedingung erfüllt ist, und nur dann erfüllt ist, wenn die bestimmte Position sich in der der bestimmten aktivierbaren Zone (10) zugeordneten Anziehungszone (11) oder in der bestimmten aktivierbaren Zone (10) befindet.

3. Verfahren nach einem der vorhergehenden Ansprüche, **dadurch gekennzeichnet, dass** die zweite Bedingung nur dann erfüllt ist, wenn der Winkel (α), den eine erste Gerade (d) und eine zweite Gerade (d') zwischen sich bilden, wobei die erste Gerade (d) parallel zur Richtung (d) der Verschiebung des Cursors liegt, wobei die zweite Gerade (d') die Gerade ist, die sowohl durch die Mitte (C) der bestimmten aktivierbaren Zone (10) als auch durch die letzte laufende Position (1) des Cursors vor der vom Verfahren berücksichtigten Verschiebung verläuft, geringer ist als ein fester vorbestimmter Schwellwert.

4. Verfahren nach Anspruch 3, **dadurch gekennzeichnet, dass**, wenn mehrere aktivierbare Zonen (10) die Anziehungsbedingungen erfüllen, der Cursor tatsächlich zu der aktivierbaren Zone (10) angezogen wird, die den Winkel (α) zwischen der ersten Geraden (d) und der zweiten Geraden (d') minimiert.

5. Verfahren nach einem der vorhergehenden Ansprüche, **dadurch gekennzeichnet, dass** die zweite Bedingung nur dann erfüllt ist, wenn ein Abschnitt der Geraden (d), die die Verschiebung des Cursors darstellt, eine nicht leere Schnittlinie mit der bestimmten aktivierbaren Zone (10) hat.

6. Verfahren nach Anspruch 5, **dadurch gekennzeichnet, dass** die zweite Bedingung nur dann erfüllt ist, wenn ein hinter einer Zwischenposition, die zwischen der laufenden Position (1) des Cursors am Ende der vorhergehenden Verschiebung nach der Verarbeitung durch das Verfahren und der bestimmten Position (2) liegt oder die mit einer der Positionen (1, 2) zusammenfällt, liegender Abschnitt der Geraden (d), die die Verschiebung des Cursors darstellt, eine nicht leere Schnittlinie mit der bestimmten aktivierbaren Zone (10) hat.

7. Verfahren nach Anspruch 6, **dadurch gekennzeichnet, dass** die Zwischenposition mit der laufenden Position (1) des Cursors am Ende der vorhergehenden Verschiebung nach der Verarbeitung durch das Verfahren zusammenfällt.

8. Verfahren nach einem der Ansprüche 5 bis 7, **dadurch gekennzeichnet, dass** die bestimmte aktivierbare Position (10), zu der der Cursor angezogen werden kann, jede aktivierbare Zone (10) sein kann, der eine Anziehungszone (11) zugeordnet ist, mit Ausnahme der letzten aktivierbaren Zone, zu der der Cursor tatsächlich angezogen wurde, wenn der Cursor sich am Anfang der im Verfahren berücksichtigten Verschiebung noch in der letzten aktivierbaren Zone befindet.

9. Verfahren nach einem der vorhergehenden Ansprüche, **dadurch gekennzeichnet, dass**, wenn der Cursor im Schritt der bedingten Anziehung automatisch auf eine bestimmte aktivierbare Zone (10) gesetzt wird, die Stelle (3) der bestimmten aktivierbaren Zone, auf die der Cursor gesetzt ist, die Schnittlinie zwischen der die Verschiebung des Cursors darstellenden Geraden (d) und einem vorbezeichneten Bereich (a und b) der bestimmten aktivierbaren Zone (10) ist.

10. Verfahren nach Anspruch 9, **dadurch gekennzeichnet, dass** jede aktivierbare Zone (10) rechtwinklig ist, und dass der vorbezeichnete Bereich (a und b) aus den beiden Diagonalen (a und b) der rechtwinkligen Form besteht.

11. Verfahren nach einem der vorhergehenden Ansprüche, **dadurch gekennzeichnet, dass** alle Anziehungszonen (11), die sich in einem gleichen Fenster des Bildschirms (12) befinden, die gleiche Größe haben.

12. Verfahren nach einem der vorhergehenden Ansprüche, **dadurch gekennzeichnet, dass** eine Anziehungszone (11) etwa zehnmal ausgedehnter ist als die ihr zugeordnete aktivierbare Zone (10).

13. Verfahren nach einem der vorhergehenden Ansprüche, **dadurch gekennzeichnet, dass** in Abwesenheit einer realen Anziehung des Cursors die bestimmte Position (2) vom Verfahren mit einer vorbestimmten Tastperiode periodisch berechnet wird.

14. Verfahren nach einem der vorhergehenden Ansprüche, **dadurch gekennzeichnet, dass** die bestimmte Position (2) eine Position ist, die von dem Verfahren ausgehend von einer Information über den Verschiebungsgeschwindigkeitsvektor des Cursors berechnet wird, wobei die Information von einer Steuerung durch eine Bedienungsperson (20) kommt.

15. Verfahren nach den Ansprüchen 13 und 14, **dadurch gekennzeichnet, dass** die bestimmte Position (2) durch Hinzufügen zur laufenden Position (1) des Cursors am Ende der vorhergehenden Periode eines Verschiebungsvektors erhalten wird, der dem Produkt aus dem Verschiebungsgeschwindigkeitsvektor mit der Tastperiode entspricht.

16. Verfahren nach Anspruch 15, **dadurch gekennzeichnet, dass** die die Verschiebung des Cursors darstellende Gerade (d), die durch das Verfahren berechnet wird, die Gerade ist, die sowohl durch die bestimmte Position (2) als auch durch die laufende Position (1) des Cursors am Ende der vorhergehenden Periode verläuft.

17. Verfahren nach Anspruch 16, **dadurch gekennzeichnet, dass** die Abmessung der Anziehungszone (11) größer ist als der Geradenabschnitt, der zwischen der laufenden Position (1) des Cursors am Ende der vorhergehenden Periode und der bestimmten Position (2) liegt.

18. Verfahren nach einem der vorhergehenden Ansprüche, **dadurch gekennzeichnet, dass** nach einer realen Anziehung des Cursors der Cursor während einer normalen Blockierfrist blockiert wird, die mit einer Reaktion der Bedienungsperson (20) kompatibel ist und es ihr erlaubt, die Verschiebung des Cursors anzuhalten.

19. Verfahren nach Anspruch 18, **dadurch gekennzeichnet, dass** die normale Blockierfrist zwischen 250 ms und 350 ms liegt.

20. Verfahren nach einem der Ansprüche 18 bis 19, **dadurch gekennzeichnet, dass** nach der realen Anziehung des Cursors, wenn die Verschiebung des Cursors durch die Bedienungsperson (20) aufrechterhalten wird, die normale Blockierfrist auf eine reduzierte Blockierfrist für die folgende reale Anziehung reduziert wird, wenn diese direkt auf die vorausgehende reale Anziehung folgt.

21. Verfahren nach Anspruch 20, **dadurch gekennzeichnet, dass** die reduzierte Blockierfrist zwischen 100 ms und 150 ms liegt.

22. Verfahren nach einem der vorhergehenden Ansprüche, **dadurch gekennzeichnet, dass**, wenn mehrere aktivierbare Zonen (10) die Anziehungsbedingungen erfüllen, der Cursor tatsächlich zu der aktivierbaren Zone (10) angezogen wird, die der bestimmten Position (2) am nächsten liegt.

23. Verfahren nach einem der vorhergehenden Ansprüche, **dadurch gekennzeichnet, dass** das Verfahren das normale Verwaltungsverfahren der Verschiebung des Cursors überlagert, aber gleichzeitig von dem normalen Verwaltungsverfahren der Verschiebung des Cursors unabhängig bleibt.

24. Verfahren nach einem der vorhergehenden Ansprüche, **dadurch gekennzeichnet, dass** das Verfahren kontinuierlich, außer im Fall der Initialisierung des Zyklus, den Zyklus durchführt, der aus der folgenden Folge von elementaren Vorgängen besteht:
- wenn der Cursor nicht blockiert ist:
- Berechnen einer vorübergehenden Position Pt des Cursors, wobei die vorübergehende Position Pt die bestimmte Position (2) ist, zu der der Cursor sich während des betrachteten Zyklus bewegt, ausgehend einerseits von der laufenden Position Pp (1) des Cursors des vorhergehenden Zyklus und andererseits von einem Verschiebungsvektor des Cursors, der ausgehend von einem Befehl einer Bedienungsperson (20) erhalten wird;
- Autorisieren der Anziehung zu jeder aktivierbaren Zone (10), in der einerseits die vorübergehende Position Pt in der aktivierbaren Zone (10) oder in der der aktivierbaren Zone (10) zugeordneten entsprechenden Anziehungszone (11) enthalten ist, und andererseits der hinter der laufenden Position Pp des vorhergehenden Zyklus liegende Abschnitt der Geraden (d), die durch die vorübergehenden Positionen Pp und Pt verläuft, die aktivierbare Zone (10) schneidet, mit Ausnahme der letzten aktivierbaren Zone, zu der der Cursor tatsächlich angezogen wurde, wenn die vorübergehende Position Pp des vorhergehenden Zyklus sich am Anfang der im vorliegenden Zyklus berücksichtigten Verschiebung noch in der letzten aktivierbaren Zone befindet;
- wenn die Anziehung zu mindestens einer aktivierbaren Zone autorisiert wird:
- für jede aktivierbare Zone (10), zu der die Anziehung autorisiert ist, Berechnung der Entfernung zwischen der vorübergehenden Position Pp und dem Schwerpunkt (C) der aktivierbaren Zone und Auswahl der aktivierbaren Zone (10), die die Entfernung minimiert;
- Bestimmung einer Endposition PF (3) des Cursors, die in der Schnittlinie zwischen der ausgewählten aktivierbaren Zone (10) und der Geraden (d) liegt, die durch die vorübergehenden Positionen Pt und Pp verläuft;
- Zuweisung der Endposition PF zur laufenden Position des Cursors;
- Blockieren des Cursors;
- Übergang zum folgenden Zyklus;
- wenn keine Anziehung zu einer aktivierbaren Zone autorisiert wird:
- Zuweisung der normalen Blockierfrist zur Blockierfrist;
- Zuweisung der vorübergehenden Position Pt zur laufenden Position des Cursors;
- Übergang zum folgenden Zyklus;
- wenn der Cursor blockiert ist:
- Zuweisung der Endposition PFp des vorhergehenden Zyklus zur laufenden Position des Cursors;
- Inkrementieren des Zählers, der es ermöglicht, die Blockierzeit zu zählen, bis die Blockierzeit die Blockierfrist überschreitet oder bis der Befehl der Bedienungsperson (20) geändert wird;
- Freigabe des Cursors;
- Zuweisung der reduzierten Blockierfrist zur Blockierfrist;
- Nullrücksetzung des Zählers;
- Übergang zum folgenden Zyklus;
wobei die Initialisierung des Zyklus einen elementaren Freigabevorgang des Cursors, einen elementaren Zuweisungsvorgang der normalen Blockierfrist zur Blockierfrist, einen Vorgang der Nullrücksetzung des Zählers enthält.

25. Verfahren nach Anspruch 24, **dadurch gekennzeichnet, dass** die Initialisierung beim Einschalten des Bildschirms (12) oder bei einem Fensterwechsel auf dem Bildschirm (12) durchgeführt wird.

26. System zur Steuerung der Verschiebung eines Cursors auf einem Bildschirm (12), **dadurch gekennzeichnet, dass** es einen Verarbeitungsmodul (22) aufweist, der Mittel enthält, die ausgelegt sind, um die Schritte des Verfahrens nach einem der vorhergehenden Ansprüche durchzuführen, wobei der Bildschirm (12) dem Verarbeitungsmodul (22) zugeordnet ist.

27. System nach Anspruch 26, **dadurch gekennzeichnet, dass** der Bildschirm (23) ein Bildschirm einer Konsole eines Luftfahrzeugs ist.

28. System nach Anspruch 27, **dadurch gekennzeichnet, dass** der Verarbeitungsmodul (22) mindestens ein Marker aufweisendes Navigationsfenster verwaltet.

29. System nach einem der Ansprüche 26 bis 28, **dadurch gekennzeichnet, dass** es auch einen Bezeichnungsblock (21) aufweist, der die Befehle der Bedienungsperson (20) an den Verarbeitungsmodul (22) überträgt.

30. System nach Anspruch 29, **dadurch gekennzeichnet, dass** der Bezeichnungsblock (21) ein multidirektionaler Steuerhebel mit einem Validierungsknopf ist, wobei der Hebel dem Verarbeitungsmodul (22) eine Geschwindigkeitsvektorinformation für die Verschiebung des Cursors liefert.

31. System nach Anspruch 30, **dadurch gekennzeichnet, dass** der Hebel eine Vorrichtung von der Art Rändelrad aufweist, wobei diese Vorrichtung einen zusätzlichen Betriebsmodus ermöglicht, der die Anziehungszone (11) nicht berücksichtigt, sondern darin besteht, die Drehung von vier Halbgeraden, die ein orthogonales Koordinatensystem auf dem Bildschirm (23) bilden, um die laufende Position des Cursors zu erlauben, wobei eine von einer der Halbgeraden geschnittene aktivierbare Zone (10) durch einfachen Druck auf den Hebel in der der Halbgeraden entsprechenden Richtung ausgewählt werden kann.

32. System nach Anspruch 30, **dadurch gekennzeichnet, dass** der Hebel eine Vorrichtung von der Art Rändelrad aufweist, wobei die Vorrichtung einen zusätzlichen Betriebsmodus erlaubt, der darin besteht, die Drehung von vier Halbgeraden, die ein orthogonales Koordinatensystem auf dem Bildschirm (23) bilden, um die laufende Position des Cursors zu erlauben, wobei eine aktivierbare Zone (10) durch einfachen Druck auf den Hebel in der einer der Halbgeraden entsprechenden Richtung ausgewählt werden kann, vorausgesetzt, die Halbgerade schneidet die der aktivierbaren Zone (10) entsprechende Anziehungszone (11).

## Claims

1. Method of processing the movement of a cursor over a screen (12) which comprises one or more cursor activatable zones, at least one activatable zone (10) being surrounded by an attraction zone (11) which is associated therewith, the method carrying out, during the movement of the cursor, towards a specified position (2) which is actual or fictitious, a conditional attraction step automatically placing the cursor on a specified activatable zone (10) only if a first condition is fulfilled, the first condition being fulfilled if the specified position is situated in the attraction zone (11) associated with the specified activatable zone (10), the method being **characterized in that** the conditional attraction step is preceded by an evaluation step evaluating the direction (d) of the movement of the cursor, and **in that** the conditional attraction step is carried out only if, in addition to the first condition, a second condition is also fulfilled, the second condition being fulfilled only if a portion of the line (d) representing the movement of the cursor is situated in the vicinity of the specified activatable zone (10).

2. Method according to Claim 1, **characterized in that** the first condition is fulfilled if and only if the specified position is situated in the attraction zone (11) associated with the specified activatable zone (10) or in the specified activatable zone (10).

3. Method according to either of the preceding Claims, **characterized in that** a second condition is fulfilled only if the angle (α) which a first line (d) and a second line (d') make between themselves, the first line (d) being parallel to the direction (d) of the movement of the cursor, the second line (d') being the line which passes both through the centre (C) of the specified activatable zone (10) and through the last current position (1) of the cursor before the movement considered by the method, is less than a predetermined fixed threshold.

4. Method according to Claim 3, **characterized in that** when several activatable zones (10) fulfil the attraction conditions, the cursor is actually attracted towards the activatable zone (10) which minimizes the angle (α) between the first line (d) and the second line (d').

5. Method according to one of the preceding Claims, **characterized in that** the second condition is fulfilled only if a portion of the line (d) representing the movement of the cursor has a nonempty intersection with the specified activatable zone (10).

6. Method according to Claim 5, **characterized in that** the second condition is fulfilled only if a portion, posterior to an intermediate position which lies between the current position (1) of the cursor at the end of the previous movement after processing by the method and the specified position (2) or which coincides with one of said positions (1, 2) of the line (d) representing the movement of the cursor has a nonempty intersection with the specified activatable zone (10).

7. Method according to Claim 6, **characterized in that** the intermediate position coincides with the current position (1) of the cursor at the end of the previous movement after processing by the method.

8. Method according to any one of Claims 5 to 7, **characterized in that** the specified activatable zone (10) towards which the cursor can be attracted, can be any activatable zone (10) with which an attraction zone (11) is associated, except for the last activatable zone towards which the cursor has actually been attracted if the cursor is still in said last activatable zone at the start of the movement considered in the method.

9. Method according to any one of the preceding Claims, **characterized in that** when the cursor is automatically placed on a specified activatable zone (10) during the conditional attraction step, the location (3), on which the cursor is placed, of the specified activatable zone is the intersection between the line (d) representing the movement of the cursor and a predesignated part (a and b) of the specified activatable zone (10).

10. Method according to Claim 9, **characterized in that** each activatable zone (10) is of rectangular shape and **in that** the predesignated part (a and b) consists of the two diagonals (a and b) of the rectangular shape.

11. Method according to any one of the preceding Claims, **characterized in that** all the attraction zones (11) situated on one and the same window of the screen (12) have the same size.

12. Method according to any one of the preceding Claims, **characterized in that** an attraction zone (11) is around some ten times more extensive than the activatable zone (10) associated therewith.

13. Method according to any one of the preceding Claims, **characterized in that**, in the absence of actual attraction of the cursor, the specified position (2) is periodically evaluated by the method with a predetermined sampling period.

14. Method according to any one of the preceding Claims, **characterized in that** the specified position (2) is a position evaluated by the method on the basis of a speed vector cue for the movement of the cursor, which cue originates from a command from a human operator (20).

15. Method according to Claims 13 and 14, **characterized in that** the specified position (2) is obtained by the addition, to the current position (1) of the cursor at the end of the previous period, of a movement vector corresponding to the product of the movement speed vector times the sampling period.

16. Method according to Claim 15, **characterized in that** the line (d) representing the movement of the cursor evaluated by the method is the line passing both through the specified position (2) and through the current position (1) of the cursor at the end of the previous period.

17. Method according to Claim 16, **characterized in that** the dimension of the attraction zone (11) is greater than the portion of line lying between the current position (1) of the cursor at the end of the previous period and the specified position (2).

18. Method according to any one of the preceding Claims, **characterized in that** after an actual attraction of the cursor, the cursor is disabled for a normal disabling span compatible with a reaction of the human operator (20) allowing him to stop the movement of the cursor.

19. Method according to Claim 18, **characterized in that** the normal disabling span lies between 250 ms and 350 ms.

20. Method according to either of Claims 18 and 19, **characterized in that**, after actual attraction of the cursor, in the event of holding of the movement of the cursor by the human operator (20), the normal disabling span is reduced to a reduced disabling span for the next actual attraction if the latter immediately succeeds the actual attraction which precedes it.

21. Method according to Claim 20, **characterized in that** the reduced disabling span lies between 100 ms and 150 ms.

22. Method according to any one of the preceding Claims, **characterized in that** when several activatable zones (10) fulfil the attraction conditions, the cursor is actually attracted towards the activatable zone (10) which is the closest to the specified position (2).

23. Method according to any one of the preceding Claims, **characterized in that** the method is superimposed on the normal method of managing the movement of the cursor whilst remaining independent of the normal method of managing the movement of the cursor.

24. Method according to any one of the preceding Claims, **characterized in that** the method carries out continually, except in the event of initialization of the cycle, the cycle consisting of the following succession of elementary operations:
- if the cursor is not disabled:
- calculation of a temporary position Pt of the cursor, the temporary position Pt being the specified position (2) towards which the cursor moves in the course of the cycle considered, on the basis on the one hand of the current position (1) Pp of the cursor of the previous cycle and on the other hand of a movement vector of the cursor obtained on the basis of a command from a human operator (20);
- authorization of attraction towards each activatable zone (10) for which, on the one hand the temporary position Pt is included in said activatable zone (10) or in the associated attraction zone (11) corresponding to said activatable zone (10) and on the other hand the portion, posterior to the current position Pp of the previous cycle, of the line (d) passing through the temporary positions Pp and Pt intercepts said activatable zone (10), except for the last activatable zone towards which the cursor has actually been attracted if the temporary position Pp of the previous cycle still lies in said last activatable zone at the start of the movement considered in the present cycle;
- if the attraction is authorized towards at least one activatable zone:
- for each activatable zone (10) towards which the attraction is authorized, calculation of the distance lying between the temporary position Pt and the centre of gravity (C) of said activatable zone, and selection of the activatable zone (10) which minimizes said distance;
- determination of a final position (3) PF of the cursor which lies in the intersection between the selected activatable zone (10) and the line (d) passing through the temporary positions Pt and Pp;
- assignment of the final position PF to the current position of the cursor;
- disabling of the cursor;
- passage to the next cycle;
- if no attraction towards an activatable zone is authorized:
- assignment of the normal disabling span to the disabling span;
- assignment of the temporary position Pt to the current position of the cursor;
- passage to the next cycle;
- if the cursor is disabled:
- assignment of the final position PFp of the previous cycle to the current position of the cursor;
- an incrementation of the counter making it possible to count the disabling time until the disabling time exceeds the disabling span or until the command from the human operator (20) is modified:
- enabling of the cursor;
- assignment of the reduced disabling span to the disabling span;
- re-zeroing of the counter;
- passage to the next cycle;
the initialization of the cycle comprising an elementary operation of enabling the cursor, an elementary operation of assigning the normal disabling span to the disabling span, an operation of re-zeroing the counter.

25. Method according to Claim 24, **characterized in that** the initialization is carried out during the energizing of the screen (12) or during a change of window on the screen (12).

26. System for controlling the movement of a cursor over a screen (12), **characterized in that** it comprises a processing module (22) comprising means suitable for carrying out the steps of the method according to one of the preceding claims, the screen (12) being associated with said processing module (22).

27. System according to Claim 26, **characterized in that** the screen (23) is an aircraft console screen.

28. System according to Claim 27, **characterized in that** the processing module (22) manages at least one navigation window comprising markers.

29. System according to any one of Claims 26 to 28, **characterized in that** it also comprises a designation block (21) transmitting the commands from the human operator (20) to the processing module (22).

30. System according to Claim 29, **characterized in that** the designation block (21) is a multi-directional control lever with a validation button, said lever supplying the processing module (22) with a speed vector cue in respect of the movement of the cursor.

31. System according to Claim 30, **characterized in that** said lever comprises a coding wheel type device, which device allows a supplementary mode of operation which disregards the attraction zones (11) but consists in allowing the rotation, around the current position of the cursor, of four half-lines forming an orthogonal reference frame on the screen (23), an activatable zone (10) intercepted by one of the half-lines being selectable by simply pressing on said lever in the direction corresponding to said half-line.

32. System according to Claim 30, **characterized in that** said lever comprises a coding wheel type device, which device allows a supplementary mode of operation which consists in allowing the rotation, around the current position of the cursor, of four half-lines forming an orthogonal reference frame on the screen (23), an activatable zone (10) being selectable by simply pressing on said lever in the direction corresponding to one of the half-lines on condition that said half-line intercepts the attraction zone (11) associated with said activatable zone (10).
